(19) Europäisches Patentamt

European Patent Office

Office européen des brevets

(11) Veröffentlichungsnummer: **0 264 609 B1**

(12) **EUROPÄISCHE PATENTSCHRIFT**

(45) Veröffentlichungstag der Patentschrift: **24.07.91**

(21) Anmeldenummer: **87113311.2**

(22) Anmeldetag: **11.09.87**

(51) Int. Cl.⁵: **C09D 167/00, C08K 5/10**

(54) **Ester- und Ethergruppen enthaltende Polyhydroxylverbindungen als Reaktivverdünner.**

(30) Priorität: **24.09.86 DE 3632358**

(43) Veröffentlichungstag der Anmeldung:
**27.04.88 Patentblatt 88/17**

(45) Bekanntmachung des Hinweises auf die
Patenterteilung:
**24.07.91 Patentblatt 91/30**

(84) Benannte Vertragsstaaten:
**AT BE CH DE ES FR GB IT LI NL SE**

(56) Entgegenhaltungen:
**EP-A- 0 062 866**
**DE-A- 2 531 963**
**US-A- 4 343 925**

(73) Patentinhaber: **BAYER AG**

**W-5090 Leverkusen 1 Bayerwerk(DE)**

(72) Erfinder: **Höhlein, Peter, Dr.**
**Windmühlenweg 3e**
**W-4152 Kempen(DE)**
Erfinder: **Kreiss, Eberhard**
**Ratherstrasse 22**
**W-4150 Krefeld(DE)**
Erfinder: **Mory, Franz**
**Breslauer Strasse 31**
**W-4150 Krefeld(DE)**
Erfinder: **Riberi, Bernd, Dr. c/o Mobay Corpo-**
**ration**
**Plastics and Rubber Division Building 8**
**Mobay Road Pittsburgh, PA 15205(US)**

**Beschreibung**

Die Erfindung betrifft die Verwendung Ester- und Ethergruppen enthaltender Polyhydroxylverbindungen als Reaktivverdünner für Vernetzer-haltige oder lufttrocknende Überzugsmittel, die als Bindemittel ölfreie Polyester bzw. Alkydharze - gegebenenfalls in Kombination mit einem oder mehreren Vernetzungsmitteln - enthalten.

Unter "Reaktivverdünner" versteht man niedrigviskose Flüssigkeiten, die harzartige Bindemittel verdünnen und dadurch dem Überzugsmittel die zu seiner Applikation notwendige Viskosität verleihen, zur Reaktion mit dem Bindemittel befähigte funktionelle Gruppen enthalten und beim Härtungsvorgang zum überwiegenden Teil - jeweils anhängig von ihrer Flüchtigkeit - Bestandteil des gehärteten Überzugs werden.

Sowohl für Vernetzer-haltige als auch für lufttrocknende Überzugsmittel auf Polyester- bzw. Alkydharzbasis sind zahlreiche Verbindungen als Reaktivverdünner vorgeschlagen worden; vgl. z.B. S. Enomoto et al., J. Appl. Polym. Sci. 22, 253-265 (1978); S. Hochberg, J. Oil Colour Chemists'Assoc. 48, 1043-1068 (1965); D.B. Larson/W. D. Emmons, "The Chemistry of High Solids Alkyd/Reactive Diluent Coatings", Coatings Conference, Athen 1982; DE-OS 24 46 760, 31 15 071, 31 51 366. Die meisten vorgeschlagenen Verbindungen konnten jedoch die in sie gesetzten Erwartungen nicht erfüllen, weil sie entweder bei Pigmentierung zu vermindertem Glanz und zu einem starken Glanzabfall bei Bewitterung oder zu verlängerten Trocknungszeiten und teilweise soger zu klebrigen Oberflächen führen.

Außerdem eignen sich die bislang als Reaktivverdünner empfohlenen Verbindungen aufgrund ihrer Struktur entweder prinzipiell nur für lufttrocknende oder nur für Vernetzer-haltige Überzugsmittel. Eine Reaktivverdünner-Klasse für beide Bindemittelsysteme ist dagegen nicht bekannt.

Aufgabe der Erfindung was es, Reaktivverdünner aufzufinden, welche die Nachteile des Standes der Technik überwinden, wodurch Reaktivverdünner-haltige Lacksysteme auf Basis von Alkydharzen und/oder ölfreien Polyestern zugänglich werden sollten, die unter Ausbildung einwandfreier Überzüge in praxisgerechten Zeiten aushärten und keine oder nur geringe Mengen organischer Lösungsmittel, die nicht als Reaktivverdünner wirken, benötigen.

Überraschenderweise wurde gefunden, daß Umsetzungsprodukte Ethergruppen-haltiger Polyhydroxylverbindungen und (gesättigter und/oder ungesättigter) Monocarbonsäuren diese Bedingungen erfüllen. Durch die geeignete Wahl der Monocarbonsäure kann das Umsetzungsprodukt für den gewünschten Zweck - Reaktivverdünner für lufttrocknende oder Vernetzer-haltige Lacksysteme, Verträglichkeit mit weiteren Zusätzen, etc. - zugeschnitten werden. Möchte man einen Reaktivverdünner für Vernetzer-haltige Lacke haben, müssen die Monocarbonsäuren nicht ungesättigt sein, da die Vernetzungsreaktion über freie Hydroxylgruppen verläuft; benötigt man einen Reaktivverdünner für lufttrocknende Lacke, so legt man keinen Wert auf freie Hydroxylgruppen, kann aber über Art und Menge der ungesättigten Monocarbonsäuren die Reaktivität steuern.

Gegenstand der Erfindung ist die Verwendung von Veresterungsprodukten von
A. Polyolen, die im Mittel mindestens 3, vorzugsweise 4 bis 8, Hydroxylgruppen pro Molekül und pro Hydroxylgruppe im Mittel 0,5 bis 15, vorzugsweise 1 bis 5, aber pro Molekül im Mittel insgesamt nicht mehr als 20 Ethergruppen enthalten, und
B. 0,05 bis 1,0, vorzugsweise 0,10 bis 0,95, insbesondere 0,30 bis 0,90, Äquivalenten (bezogen auf Hydroxylgruppen von A)
$C_2$-$C_{30}$-, vorzugsweise $C_6$-$C_{30}$-, insbesondere $C_8$-$C_{24}$-Monocarbonsäuren
mit der Maßgabe, daß die Veresterungsprodukte aus A und B eine Säurezahl von maximal 5, eine Hydroxylzahl von 5 bis 800, vorzugsweise 10 bis 500, und im Mittel pro Molekül 0,1 bis 6 Hydroxylgruppen aufweisen,
als Reaktivverdünner für Lacksysteme auf Basis von Alkydharzen und-oder ölfreien Polyestern.

Bevorzugte Polyole A sind Umsetzungsprodukte von I. als "Starter" eingesetzten Polyhydroxylverbindungen mit im Mittel mindestens 3, vorzugsweise 4 bis 8 Hydroxylgruppen und 3 bis 12 C-Atomen pro Molekül und II. Alkoxylierungsmitteln mit 2 bis 8, vorzugsweise 2 oder 3, C-Atomen pro Molekül.

Bevorzugte Starter A.I umfassen beispielsweise Glycerin, Trimethylolethan und -propan, Pentaerythrit, Sorbit, Mannit, Saccharose, Lactose, Sorbitan, $\alpha$-Methylglycosit, $\alpha$-Hydroxy-$C_1$-$C_4$-alkyl-glycosit, und Gemische dieser Verbindungen. Im Rahmen der anspruchgemäß zulässigen mittleren Hydroxylfunktionalität können neben mindestens dreiwertigen Hydroxylverbindungen A.I auch Diole mit bis zu 8 C-Atomen, wie z.B. Wasser, Ethylenglykol, Propylenglykol, Butandiol-1,4, Diethylenglykol, Dipropylenglykol und deren Mischungen eingesetzt werden. So läßt sich beispielsweise aus Sorbit (Funktionalität = 6) oder Sorbitan (Funktionalität = 4) mit Ethylen- oder Propylenglykol oder Wasser (Funktionalität = 2) ein Startergemisch herstellen, dessen mittlere Hydroxylfunktionalität unter der der höherwertigen eingesetzten Polyole liegt, aber immer noch mindestens 3 beträgt.

Statt der Einstellung der Funktionalität der Polyole A durch Auswahl der bei der Alkoxylierung einzusetzenden Starter A.I ist es auch möglich, separat hergestellte Ethergruppen-haltige Polyole A unterschiedlicher Funktionalität und-oder Hydroxylzahl so miteinander zu mischen, daß sich die anspruchsgemäß geforderten Parameter ergeben.

Bevorzugte Alkoxylierungsmittel A.II umfassen beispielsweise $C_1$-$C_8$-Alkylenoxide wie Ethylenoxid, Proplenoxid, 1,2- und 2,3-Butylenoxid, Styroloxid und Gemische dieser Verbindungen. Besonders bevorzugte Alkoxylierungsmittel sind Ethylenoxid, Proplenoxid und deren Gemische.

Als Monocarbonsäuren B werden vorzugsweise aliphatische Monocarbonsäuren ausgewählt; besonders bevorzugt werden ungesättigte Fettsäuren mit einer Jodzahl von 10 bis 300 verwendet. Beispiele bevorzugter Monocarbonsäuren sind Essigsäure, Buttersäure, n-Heptancarbonsäure, 2-Ethylhexancarbonsäure, n-Nonancarbonsäure, synthetische Fettsäuregemische mit 10 bis 18 Kohlenstoffatomen und insbesondere ungesättigte Fettsäuren wie Sojaölfettsäure, Ricinusölfettsäure, Linolsäure, Olivenölfettsäure, Safflorölfettsäure, Konjuvandolfettsäure, Ölsäure, Tallölfettsäure und deren Gemische.

Die Veresterung der Reaktanden A und B kann auf an sich bekannte Weise erfolgen und wird vorzugsweise so lange fortgesetzt, bis die Säurezahl auf 5 oder darunter gesunken ist. Die Viskosität liegt dann im allgemeinen zwischen 50 und 4000 mPa.s, gemessen im Hoeppler-Viskosimeter bei 20 °C.

Die erfindungsgemäß zu verwenden Veresterungsprodukte aus A und B werden den Lackbindemitteln in der Regel in Mengen von 5 bis 75, vorzugsweise 10 bis 50, Gew.-%, bezogen auf die Summe von Bindemittel und Reaktivverdünner, zugesetzt. Der Gehalt organischer Lösungsmittel, die nicht als Reaktivverdünner wirken (beim Härten also nicht im Lackfilm verbleiben), kann durch die erfindungsgemäß zu verwendenden Reaktivverdünner deutlich gesenkt oder gar völlig vermieden werden.

Unter Alkydharzen und ölfreien Polyestern versteht man durch Polykondensation nach bekannten Verfahren aus Alkoholen und Carbonsäuren hergestellte Polykondensate der Art, wie sie z.B. in Römpp's Chemielexikon, Bd. 1, S. 202, Frankh'sche Verlagsbuchhandlung, Stuttgart, 1966 definiert oder bei D.H. Solomon, The Chemistry of Organic Filmformers, S, 75 - 101, John Wiley & Sons Inc., New York, 1967, beschrieben sind.

Unter "Alkydharzen" werden in dieser Anmeldung fettsäure- bzw. ölmodifizierte Polyester verstanden.

Für die Synthese der Polyester bzw. Alkydharze bevorzugte Säurekomponenten sind aliphatische, cycloaliphatische gesättigte oder ungesättigte und/oder aromatische mehrbasische Carbonsäuren, vorzugsweise Di-, Tri-, und Tetracarbonsäuren, mit 2 bis 14, vorzugsweise 4 bis 12 C-Atomen pro Molekül oder deren veresterungsfähige Derivate (z.B. Anhydride oder Ester), z.B. Phthalsäureanhydrid, Isophthalsäure, Terephthalsäure, Tetrahydro- und Hexahydrophthalsäureanhydrid, Endomethylentetrahydrophthalsäure, Bernsteinsäure, Glutarsäure, Sebacinsäure, Azelainsäure, Trimellithsäure und Trimellithsäureanhydrid und Pyromellithsäureanhydrid. Phthalsäureanhydrid ist die gebräuchlichste Säurekomponente.

Für die Synthese der Polyester bzw. Alkydharze bevorzugte Alkohole sind aliphatische, cycloaliphatische und/oder araliphatische Alkohole mit 1-15, vorzugsweise 2-6 C-Atomen, und 1-6, vorzugsweise 1-4, an nichtaromatische C-Atome gebundenen OH-Gruppen pro Molekül, z.B. Glykole wie Ethylenglykol, Propandiol-1,2 und -1,3, Butandiol-1,2, -1,3, und -1,4, 2-Ethylpropandiol-1,3, 2-Ethylhexandiol-1,3, Neopentylglykol, 2,2-Trimethylpentandiol-1,3, Hexandiol-1,6, Cyclohexandiol-1,2 und 1,4. 1,2- und 1,4-Bis-(hydroxymethyl)-cyclohexan, Adipinsäure-bis-(ethylenglykolester); Etheralkohole wie Di-und Triethylenglykol, Dipropylenglykol; Dimethylolpropionsäure, oxalkylierte Bisphenole mit $2C_2$-$C_3$-Oxalkylgruppen pro Molekül, perhydrierte Bisphenole; Butantriol-1,2,4, Hexantriol-1,2,6, Trimethylolethan, Trimethylolpropan, Trimethylolhexan, Glycerin, Pentaerythrit, Dipentaerythrit, Mannit und Sorbit. Die gebräuchlichsten Alkohole sind Glycerin, Trimethylolpropan, Neopentylglykol und Pentaerythrit.

Für die Herstellung der Polyester bzw. Alkydharze bevorzugte Monocarbonsäuren sind aliphatische, cycloaliphatische gesättigte und ungesättigte und/oder aromatische Monocarbonsäuren mit 3-24 C-Atomen pro Molekül wie Benzoesäure, p-tert.-Butylbenzoesäure, Tolylsäure, Hexahydrobenzoesäure, Abietinsäure und Milchsäure.

Die Alkydharze bzw. Polyester können auch einwertige Alkohole mit 1 bis 8 C-Atomen wie Methanol, Propanol, Cyclohexanol, 2-Ethylhexanol, Benzylalkohol in Mengen bis zu 15 Gew.-%, bezogen auf Alkydharz bzw. Polyester, einkondensiert enthalten. Ebenso ist es möglich, bis zu 25 % der Esterbindungen durch Urethanbindungen zu ersetzen.

In den Alkydharzen beträgt die Öllänge, berechnet als Triglycerid und bezogen auf das Alkydharz, in der Regel 5 bis 75, vorzugsweise 20 bis 70 Gew.-%. Die trocknenden oder nichttrocknenden Fettsäuren, die im allgemeinen 6 bis 24 C-Atome enthalten, können entweder als solche oder in Form ihrer Glycerinester (Triglyceride) eingesetzt werden.

Als bevorzugt sind pflanzliche und tierische Öle, Fette oder Fettsäuren zu nennen, wie z.B. Kokos-, Erdnuß-, Ricinus-, Holz-, Oliven-, Sojabohnen-, Lein-, Baumwollsaatöl, Saffloröl oder -ölfettsäuren, dehydratisiertes Ricinusöl bzw. -fettsäure, einfach ungesättigte Fettsäuren, Schmalz, Talg und Trane, Tallölfettsäure sowie synthetische Fettsäuren, die durch Konjugierung oder Isomerisierung aus natürlichen ungesättigten Ölen oder Fettsäuren hergestellt sein können. Bevorzugte gesättigte Fettsäuren sind z.B. Kokosölfettsäuren, 2-Ethylhexansäure, Isononansäure (3,4,4-Trimethylhexansäure) sowie Palmitin- und Stearinsäure und synthetische gesättigte verzweigte Fettsäuren.

Das als Zahlenmittel bestimmte Molekulargewicht der Polyester bzw. Alkydharze beträgt 2000 - 10.000 (bis zu Molekulargewichten von 5000 dampfdruckosmometrisch bestimmt in Dioxan und Aceton, wobei bei differierenden Werten der niedrigere Wert als korrekt angesehen wird; bei Molekulargewichten über 5000 membranosmometrisch in Aceton bestimmt).

Zur Herstellung lufttrocknender Lacke werden erfindungsgemäß als Reaktivverdünner Veresterungsprodukte eingesetzt, die Reste trocknender (d.h. unter Einfluß von Luftsauerstoff copolymerisierbarer ein- oder mehrfach ethylenisch ungesättigter) Fettsäuren enthalten, damit deren reaktionsfähige $C = C$-Doppelbindungen mit denen der verwendeten Alkydharze copolymerisieren können. Die Veresterungsprodukte besitzen in diesem Fall vorzugsweise einen Gehalt freier Hydroxylgruppen unter 1 Gew.-%, bezogen auf Veresterungsprodukt. Die Herstellung der lufttrocknenden Lacke kann problemlos durch Mischen von Alkydharz, Veresterungsprodukt (Reaktivverdünner) und gegebenenfalls üblichen Zusätzen erfolgen.

Für Vernetzer-haltige Lacke verwendet man erfindungsgemäß als Reaktivverdünner Veresterungsprodukte, die pro Molekül Veresterungsprodukt im Mittel mindestens 2, vorzugsweise 2 bis 3, mit dem Vernetzer reaktionsfähige Hydroxylgruppen enthalten. Die Monocarbonsäurereste dieser Veresterungsprodukte können zwar, müssen aber nicht von trocknenden Fettsäuren herrühren, da die chemische Einbindung in den Lackfilm ja durch Reaktion der Hydroxylgruppen erfolgt.

Geeignete Vernetzer für Vernetzer-haltige Lacke sind sowohl bei Raumtemperatur mit den Polyestern und Reaktivverdünnern lagerfähige ("Eintopfsysteme", Einbrennlacke) als auch bei Raumtemperatur mit den Polyestern und Reaktivverdünnern nicht lagerfähige - weil reaktive - Komponenten ("Zweitopfsysteme").

Bevorzugte Vernetzer umfassen vornehmlich folgende Klassen:
mit Hydroxylgruppen zu Kondensationsreaktionen befähigte Aminoplastharze, wie Melamin/-, Harnstoff/- oder Guanidin/Formaldehyd-Kondensationsprodukte, wie sie beispielsweise in FR-PS 943 411 oder von D.H. Solomon in "The Chemistry of Organic Filmformers", Seiten 235-240, John Wiley & Sons, Inc., New York, 1974, beschrieben sind;
mit Hydroxylgruppen zu Kondensationsreaktionen befähigte Phenoplastharze, wie Resole oder Novolake, wie sie z.B. in "Methoden der Organischen Chemie" (Houben-Weyl), Bd. 14/2, 4. Aufl., Georg Thieme Verlag, Stuttgart 1963, 193-292 beschrieben sind;
mit Hydroxylgruppen unter Addition reagierende Polyepoxide;
Polyisocyanate, die die Isocyanatgruppen in freier ("Zweitopfsysteme") oder in verkappter Form ("Eintopfsysteme") enthalten.

Als Vernetzer bevorzugte Polyisocyanate sind beispielsweise in den folgenden Patentschriften beschrieben:
US-PS 3 124 605, 3 358 010, 3 903 126, 3 903 127, 3 976 622, 3 183 122, 3 394 111, 3 645 979, 3 919 218, GB-PS 1 060 430, 1 234 972, 1 506 3703 und 1 458 564. Vorzugsweise enthalten die Polyisocyanate Biuretgruppen, Urethangruppen, Allophanatgruppen oder Isocyanuratgruppen.

Biuretgruppen enthaltende Polyisocyanate stellen vorzugsweise Umsetzungsprodukte aus Alkylendiisocyanaten mit 4 bis 6 C-Atomen in der Alkylengruppe und Wasser dar.

Urethangruppen enthaltende Polyisocyanate sind vorzugsweise aus aliphatischen Tri- und Tetraolen mit 3 bis 8 C-Atomen, wie z.B. Trimethylolpropan, Glycerin, Pentaerythrit und aromatischen oder cycloaliphatischen Diisocyanaten mit 8 bis 18 C-Atomen wie 2,4- und/oder 2,6-Toluylendiisocyanat, 2,4'- und/oder 4,4'-Diisocyanatodicyclohexylmethan, Isophorondiisocyanat usw. aufgebaut, wobei pro 1 Hydroxylgruppe des Polyols etwa 0,5 Mol Diisocyanat reagiert hat.

Isocyanuratgruppen aufweisende Polyisocyanate stellen Cyclotrimerisationsprodukte der vorgenannten aliphatischen und aromatischen Diisocyanate dar, insbesondere aus Toluylendiisocyanat oder Hexamethylendiisocyanat.

Bevorzugte Isocyanat-Blockierungsmittel sind z.B. Phenole, insbesondere Phenol selbst, Oxime wie Cyclohexanonoxim, Lactame wie ε-Caprolactam, 1,3-Diketoverbindungen wie Malonsäurediethylester oder Acetessigsäureethylester. Die derart verkappten Polyisocyanate lassen sich vorzugsweise als Vernetzer für Einbrennlacke verwenden.

Die Polyisocyanate werden in der Regel in solchen Mengen eingesetzt, daß auf je 1 Hydroxylgruppe der Kombination (Polyester + Reaktivverdünner) 0,5 bis 2, vorzugsweise 0,7 bis 1,3, freie oder durch Deblockierung frei werdende Isocyanatgruppen entfallen.

Vernetzer, die nicht in die Klasse der (gegebenenfalls verkappten) Polyisocyanate fallen, werden gewöhnlich in solchen Mengen eingesetzt, daß jeweils pro 1 Hydroxylgruppe der Kombination (Polyester + Reaktivverdünner) 0,8 bis 2,5, vorzugsweise 0,9 bis 1,5, reaktive Gruppen des Vernetzers zur Verfügung stehen.

Vernetzer-haltige Lacke können durch Mischen von Polyester, Veresterungsprodukt (Reaktivverdünner) und gegebenenfalls üblichen Zusätzen hergestellt werden, wobei im Falle von "Eintopfsystemen" der Vernetzer zugesetzt, im Falle von "Zweitopfsystemen" der Vernetzer getrennt gehalten wird.

Übliche Zusätze, die zur Herstellung der Lacke mitverwendet werden können, sind z.B. organische Lösungsmittel, die nicht als Reaktivverdünner wirken, Sikkative, Verlaufsmittel, Hautverhinderungsmittel, Antischaummittel, viskositätsregulierende Stoffe, Pigmente, Farbstoff, Härtungskatalysatoren, UV-Absorber, Stabilisatoren gegen thermischen bzw. oxidativen Abbau, usw.

Bevorzugte organische Lösungsmittel sind z.B. einwertige Alkohole wie Methanol, Ethanol, Isopropanol, Carbonsäurealkylester wie Essigsäureethyl- und -butylester, Etheralkohole wie Propylenglykolmonoethylether, Etherester wie Propylglykolacetat, Ketone wie Methylethylketon, Methylisobutylketon, Cyclohexanon, Aromaten wie Toluol, Xylol und aliphatische Kohlenwasserstoffe wie verschiedene Benzinfraktionen. Falls man Vernetzer mit freien Isocyanatgruppen mitverwendet, wird man selbstverständlich auf organische Lösungsmittel mit gegenüber Isocyanatgruppen reaktionsfähigen Gruppen verzichten.

Die organischen Lösungsmittel werden vorzugsweise in Mengen unter 20, insbesondere unter 10, Gew.-%, bezogen auf Bindemittel/Reaktivverdünner und Vernetzer, eingesetzt. Besonders gerne verzichtet man auf organische Lösungsmittel vollständig.

Die Lacke können als Überzugsmittel für Substrate aller Art wie Holz, Kunststoffe, Leder, Textilien, Glas, Keramik, Metall, dienen. Sie lassen sich mit den üblichen Applikationsmethoden wie Spritzen, Streichen, Fluten, Gießen, Tauchen, Walzen aufbringen. Die Mengen werden im allgemeinen so gewählt, daß Trockenfilmdicken der Lackierungen (nach der Härtung) von 0,005 bis 0,10 mm resultieren.

Die die erfindungsgemäß zu verwendenden Reaktivverdünner enthaltenden Überzugsmittel können je nach Art der Härtungsreaktion innerhalb des Temperaturbereichs von 0 bis 250° C gehärtet werden. Lufttrocknende Lacke und solche, die Vernetzer mit freien Isocyanatgruppen enthalten, werden in der Regel bei Temperaturen von 0 bis 130° C, vorzugsweise bei Raumtemperatur, ausgehärtet. Einbrennlacke, die als Vernetzer beispielsweise verkappte Polyisocyanate oder Aminoplaste enthalten, benötigen im allgemeinen Härtungstemperaturen von 60 bis 250° C. Dabei ist es manchmal vorteilhaft, die Härtung zunächst bei Temperaturen unter 120° C zu beginnen und bei Temperaturen über 120° C zu Ende zu führen.

Die Überzugsmittel können sowohl als Klarlacke als auch als pigmentierte Lacke eingesetzt werden. Sie führen zu Lackierungen mit hohem Oberflächenglanz, hoher Deckkraft, ausgewogenem Härte/Elastizitäts-Niveau, guter Wasser- und Chemikalienfestigkeit und gutem Bewitterungsverhalten.

Die in den nachfolgenden Beispielen genannten Prozentangaben beziehen sich auf das Gewicht; Teile bedeuten Gewichtsteile.

Beispiele

Herstellung der Reaktivverdünner
(am Beispiel des Reaktivverdünners A)

In einem mit Rührer, Heizung, Stickstoffeinleitungsrohr, Kolonne und Wasserabgang ausgestatteten 5 l-Rührkessel werden 2857 g Sojaölfettsäure und 1827 g eines propoxylierten Gemisches aus Sorbit und Propylenglykol (Molverhältnis 2:1) mit einer Hydroxylzahl von 475 und einem Äquivalentgewicht von 118 unter Durchleiten von 2 bis 3 l Stickstoff/Stunde eingewogen. Anschließend wurde innerhalb von 3 Stunden auf 200° C aufgeheizt, wobei die am Kolonnenkopf gemessene Temperatur 105° C nicht überschritt. Sobald eine Sumpftemperatur von 200° C erreicht war und die Temperatur am Kolonnenkopf 90° C unterschritt, wurde zuerst die Kolonne entfernt und dann der Stickstoffstrom auf 10 bis 12 l/Stunde erhöht. Als eine Säurezahl von 1,6 erreicht war, wurde auf 100° C abgekühlt und das Produkt über ein Gewebefilter filtriert: Füssigkeit mit einer OH-Zahl von 66, einer Jodfarbzahl von 5 und einer Viskosität von 219 mPa.s bei 20° C.

Die Reaktivverdünner B bis L Wurden analog hergestellt (s. Tabelle).

EP 0 264 609 B1

| Reaktiv-verdünner | Säure Menge/Art | propoxyliertes Polyol Menge/Art | OH-Zahl | ÄG[3] | Veresterungsprodukt Säure-zahl | OH-Zahl | JFZ[4] | Viskosität [mPa.s] bei 20°C |
|---|---|---|---|---|---|---|---|---|
| A | 2857 Soja | 1827 Sorbit/PG[1] (2:1)[2] | 475 | 118 | 1,6 | 66 | 5 | 219 |
| B | 1147 Tall | 524 Sorbit/PG[1] (2:1)[2] | 475 | 118 | 3,0 | 26 | 8 | 238 |
| C | 1102 Soja | 569 Sorbit | 425 | 125 | 2,0 | 24 | 5 | 301 |
| D | 1112 Tall | 557 Sorbit | 425 | 125 | 3,2 | 23 | 10 | 384 |
| E | 3200 Soja | 927 Sorbit[5]/ 579 PG[1] | 425 515 | 125 109 | 2,7 | 12,7 | 4 | 128 |
| F | 3226 Tall | 908 Sorbit[5]/ 567 PG[1] | 425 515 | 125 109 | 4,2 | 22,6 | 8 | 168 |
| G | 3201 Soja | 1505 Sorbit/PG[1] (2:1)[2] | 475 | 118 | 1,7 | 25 | 6 | 167 |
| H | 2059 Soja | 2573 Sorbit | 425 | 125 | 1,5 | 168 | 3 | 1063 |

EP 0 264 609 B1

| Reaktiv-verdünner | Säure Menge/Art | propoxyliertes Polyol Menge/Art | OH-Zahl | ÄG[3] | Säure-zahl | OH-Zahl | JFZ[4] | Veresterungsprodukt Viskosität [mPa.s] bei 20°C |
|---|---|---|---|---|---|---|---|---|
| J | 2165 Soja | 1391 Sorbit[5]/ 1082 PG[1] | 425 515 | 125 109 | 1,5 | 163 | 4 | 188 |
| K | 1541 EH[6] | 1491 Sorbit[5]/ 1160 PG[1] | 425 515 | 125 109 | 1,9 | 162 | 12 | 190 |
| L | 1869 EH[6] | 1330 Sorbit[5]/ 1034 PG[1] | 425 515 | 125 109 | 2,5 | 98 | 7 | 201 |

1) Propylenglykol

2) Molverhältnis

3) Äquivalentgewicht

4) Jodfarbzahl

5) 90 %ige wäßrige Lösung

6) 2-Ethylhexansäure

In einem 10-l-Rührbehälter mit Stickstoffeinleitungsrohr und Wasserabscheider wurden 4515 g Sojaölfettsäure, 1392 g Pentaerythrit und 1780 g Phthalsäureanhydrid eingewogen und unter Einleitung von 6 l Stickstoff/Stunde bis zum Erreichen einer Viskosität entsprechend einer Auslaufzeit (hier und nachfolgend: jeweils gemessen gemäß DIN 53211 im DIN-Becher 4) von 63 s (60 %ig in Benzin, Siedebereich: 120-180° C) kondensiert, auf 180° C abgekühlt und bis zum Erreichen einer Viskosität entsprechend einer Auslaufzeit von 73 s (60 %ig in Benzin ) und einer Säurezahl von 17 gehalten. Nach dem Abkühlen und Herstellen einer 75 %igen Lösung in Benzin resultierte eine Harzlieferform mit einer Viskosität von 8395 mPa.s bei 20° C.

Beispiel 1

1350 g des in Vergleichsbeispiel 1 beschriebenen Harzes (lösungsmittelfrei) wurden in einem 3-l-Dreihalskolben auf 120° C unter Durchleiten von 1/2 l Stickstoff/Stunde aufgeschmolzen und mit 450 g Reaktivverdünner B gemischt. Nach dem Einstellen eines Feststoffgehaltes von 85,5 % durch Zugabe von 290 g Benzin resultierte eine Bindemittelmischung mit einer Säurezahl von 13,2, einer OH-Zahl von 16,2 und einer Viskosität von 5060 mPa.s (20° C).

Beispiel 2

Aus 1350 g des im Vergleichsbeispiel 1 beschriebenen Harzes (lösungsmittelfrei), 450 g Reaktivverdünner C und 300 g Benzin wurde analog Beispiel 1 eine Bindemittelmischung mit folgenden Kennzahlen hergestellt: Feststoffgehalt: 84,8 %; Viskosität: 5460 mPa.s (20° C); Säurezahl: 12,9; OH-Zahl: 16,2.

Beispiel 3

Aus 1350 g des in Vergleichsbeispiel 1 beschriebenen Harzes (lösungsmittelfrei), 450 g Reativverdünner D und 290 g Benzin wurde analog Beispiel 1 eine Bindemittelmischung mit folgenden Kennzahlen hergestellt: Feststoffgehalt: 84,8%; Säurezahl: 13,0; OH-Zahl: 23; Viskosität: 5214 mPa.s (20° C).

Vergleichsbeispiel 2

Analog Vergleichsbeispiel 1 wurden in einem 15-l-Rührkessel 8487 g Sojaöl, 1913 g Pentaerythrit und 0,49 g Dibutylzinnoxid bei 250° C unter Durchleiten von 30 l Stickstoff/Stunde umgeestert, bis 1 Teil einer Probe, in 15 Teilen Ethanol gelöst, bei 10° C klar blieb. Nach dem Abkühlen auf 200° C und der Entnahme von 1000 g Harz wurden 3384 g Phthalsäureanhydrid zugesetzt und auf 260° C aufgeheizt. Der Ansatz wurde bis zu einer Viskosität entsprechend einer Auslaufzeit von 77 s (50 %ig in Benzin) kondensiert, auf 200° C abgekühlt, bis zu einer Viskosität entsprechend einer Auslaufzeit von 136 s bei dieser Temperatur gehalten, auf 160° C abgekühlt und bis zum Erreichen einer Viskosität entsprechend einer Auslaufzeit von 174 s bei dieser Temperatur gehalten. Nach dem Lösen in Benzin resultierte ein Harz mit einem Feststoffgehalt von 60,6 %, einer Viskosität von 7490 mPa.s bei 20° C und einer Säurezahl von 5,0.

Beispiel 4

Aus 1125 g des in Vergleichsbeispiel 2 beschriebenen lösungsmittelfreien Harzes, 375 g Reaktivverdünner A und 500 g Benzin resultierte eine Bindemittelmischung mit den folgenden Kenndaten: Feststoffgehalt: 74,8 %; Säurezahl: 4,4: OH-Zahl: 31,6 und Viskosität: 7557 mPa.s (20° C).

Beispiel 5

Aus 1125 g des in Vergleichsbeispiel 2 beschriebenen lösungsmittelfreien Harzes, 375 g Reaktivverdünner G und 500 g Benzin resultierte eine Bindemittelmischung mit folgenden Kenndaten: Feststoffgehalt: 74,9%; Säurezahl: 4,8, OH-Zahl: 21,6 und Viskosität: 8789 mPa.s (20° C).

Vergleichsbeispiel 3

Analog Vergleichsbeispiel 1 wurden in einem 10-l-Rührkessel 2145 g Erdnußölfettsäure, 2310 g Trimethylolpropan, 600 g Triethylenglykol, 52 g Maleinsäureanhydrid und 2514 g Phthalsäureanhydrid unter Durchleiten von Stickstoff bei 240° C bis zu einer Viskosität entsprechend einer Auslaufzeit von 84 s (60 %ig in Xylol), einer Säurezahl von 10,8 einer Jodfarbzahl von 2 und einer OH-Zahl von 144 kondensiert.

Eine Probelösung in Butylacetat zeigte bei einem Feststoffgehalt von 74,8 % eine Viskosität von 1443 mPa.s (20° C).

Beispiel 6

Aus 1552,5 g des in Vergleichsbeispiel 3 beschriebenen Harzes, 517,5 g Reaktivverdünner H und 230 g Butylacetat resultierte ein Bindemittelgemisch mit folgenden Kenndaten: Feststoffgehalt: 89,6 %; Säurezahl: 8,9; Jodfarbzahl 2; Viskosität: 18 323 mPa.s (20° C); OH-Zahl: 138.

Beispiel 7

Aus 1552,5 g des im Vergleichsbeispiel 3 beschriebenen Harzes, 517,5 g Reaktivverdünner I und 230 g Butylacetat resultierte ein Bindemittelgemisch mit folgenden Kenndaten: Feststoffgehalt: 87,9 %; Säurezahl: 9,1; Viskosität: 10 078 mPa.s (20° C); Jodfarbzahl: 2; OH-Zahl: 151.

Vergleichsbeispiel 4

Analog Vergleichsbeispiel 1 wurden in einem 10-l-Rührkessel 730 g Isononansäure, 1493 g einer Mischung aus 5 % Laurinsäure, 30 % Myristinsäure, 57 % Palmitinsäure und 8 % Stearinsäure, 2487 g Trimethylolpropan, 95 g Ethylenglykol und 3063 g Phthalsäureanhydrid innerhalb von 12 Stunden unter Durchleiten von 20 l Stickstoff/Stunde auf 200° C aufgeheizt und bis zum Erreichen einer Viskosität entsprechend einer Auslaufzeit von 73 s (50 %ig in Xylol), und einer Säurezahl von 19 kondensiert.

Eine Probelösung in Solvesso 100® (aromatenhaltiges Lösungsmittel, Handelsprodukt von Esso) zeigte bei einem Feststoffgehalt von 60,1 % eine Viskosität von 6268 mPa.s an (20° C).

Beispiel 8

Aus 1293,7 g des in Vergleichsbeispiel 4 beschriebenen Harzes, 431,3 g Reaktivverdünner L und 575 g Solvesso 100® resultierte ein Bindemittelgemisch mit folgenden Kennzahlen: Feststoffgehalt: 72,2 %; Säurezahl: 9,3, Jodfarbzahl: 2; OH-Zahl: 64; Viskosität 12 957 mPa.s (20° C).

Beispiel 9

Aus 1293,7 g des in Vergleichsbeispiel 4 beschriebenen Harzes, 431,3 g Reaktivverdünner K und 575 g Solvesso 100® resultierte ein Bindemittelgemisch mit folgenden Kennzahlen: Feststoffgehalt: 71,2 %; Säurezahl: 9,2; Jodfarbzahl: 2; OH-Zahl: 69; Viskosität: 10 143 mPa.s (20° C).

Aus den in den Vergleichsbeispielen 1 und 2 sowie in den Beispielen 1 - 5 beschriebenen Bindemitteln wurden Klarlacke und pigmentierte Weißlacke nach den angegebenen Rezepturen hergestellt und einer vergleichenden Prüfung als oxidativ trocknende Malerlacke unterworfen. Die Ergebnisse der Prüfung sind in den Tabellen aufgelistet.

Herstellung der Klarlacke

Durch Zugabe von Benzin und Trockenstoffen wurden die Harze der Beispiele und Vergleichsbeispiele auf eine Viskosität entsprechend einer Auslaufzeit von 120 s eingestellt und auf Glasplatten mit einer Naßfilmdicke von ca. 120 μm aufgetragen. Als Trockenstoffe wurden Cobaltoctoat, Bleioctoat und Calciumoctoat verwendet. Die auf den Feststoffgehalt bezogenen Metallgehalte betrugen 0,04 % Cobalt, 0,4 % Blei und 0,1 % Calcium.

**Kenndaten der Klarlacke**

| | Viskosität entsprechend einer Auslaufzeit (s) (DIN 53211) | Festgehalt (%) | prozentuale Zusammensetzung Klarlack | | |
|---|---|---|---|---|---|
| | | | Binde-mittel | Lösungs-mittel | Hilfsstoffe |
| Beispiel 1 | 116 | 68,9 | 69,21 | 23,54 | 7,25 |
| Beispiel 2 | 115 | 67,6 | 68,31 | 24,53 | 7,16 |
| Beispiel 3 | 120 | 68,1 | 68,41 | 24,42 | 7,17 |
| Vergleich 1 | 112 | 58,9 | 59,96 | 33,76 | 6,28 |
| Beispiel 4 | 117 | 53,9 | 53,19 | 43,45 | 3,36 |
| Beispiel 5 | 120 | 53,0 | 52,68 | 43,99 | 3,33 |
| Vergleich 2 | 120 | 43,9 | 42,92 | 54,37 | 2,71 |

EP 0 264 609 B1

## Herstellen eines Weißlackes

Ein Weißlack wurde so hergestellt, daß durch Kombination der Bestandteile nach dem Anreiben in der Perlmühle ein Lack mit einer Viskosität entsprechend einer Auslaufzeit von 150 s erhalten wurde

## Eigenschaften

| | Antrocknung (h) | | Durchtrocknung (h) | | | Trockenfilm-schichtdicke [µm] |
|---|---|---|---|---|---|---|
| | staubtrocken | klebfrei | 24 | 48 | 72 | |
| Beispiel 1 | 4,0 | 7,0 | 1 | 1+ | 0(-) | 45 |
| Beispiel 2 | 4,0 | 7,0 | 1 | 0/1 | 0- | 40 |
| Beispiel 3 | 4,0 | 6,0 | 1 | 1+ | 0(-) | 40 |
| Vergleich 1 | 2,5 | 4,0 | 1/2 | 0/1 | 0- | 40 |
| Beispiel 4 | 4,0 | 16,0 | 0- | 0(-) | 0(-) | 35 |
| Beispiel 5 | 4,0 | 7,5 | 0- | 0 | | 40 |
| Vergleich 2 | 2,0 | 4,5 | 0- | 0 | | 40 |

Teile

| | |
|---|---|
| 111,73 | Bindemittel wie z.B. in Beispiel 1, 90 %ig in Benzin |
| 3,75 | Calciumoctoat mit 4 % Metallgehalt |
| 1,50 | Montmorillonit als Antiabsetzmittel |
| 70,00 | Titandioxid |
| 0,66 | Cobaltoctoat mit 6 % Metallgehalt |
| 2,50 | Bleioctoat mit 24 % Metllgehalt |
| 1,50 | Methylethylketoxim, 55 %ig |
| 19,00 | Benzin |

210,64

**Kennzahlen der Weißlacke**

| | Viskosität entsprechend einer Auslaufzeit (s) DIN 53211 | Festgehalt (%) | prozentuale Zusammensetzung des Lackes | | | |
| --- | --- | --- | --- | --- | --- | --- |
| | | | Bindemittel | Pigment | Lösungsmittel | Hilfsstoffe |
| Beispiel 1 | 151 | 78,7 | 45,25 | 31,68 | 17,65 | 5,42 |
| Beispiel 2 | 149 | 78,4 | 45,07 | 31,55 | 17,98 | 5,40 |
| Beispiel 3 | 151 | 78,2 | 44,90 | 31,44 | 18,28 | 5,38 |
| Vergleich 1 | 144 | 72,0 | 41,45 | 29,00 | 24,58 | 4,97 |
| Beispiel 4 | 148 | 67,3 | 39,29 | 27,50 | 30,13 | 3,08 |
| Beispiel 5 | 144 | 68,7 | 38,56 | 26,99 | 31,43 | 3,02 |
| Vergleich 2 | 150 | 63,6 | 34,79 | 24,35 | 38,15 | 2,71 |

EP 0 264 609 B1

**Eigenschaften der Weißlacke (150 μm Naßfilmdicke)**

| | Antrocknung (h) | | Durchtrocknung (h) | | | Trockenfilm-schichtdicke [μm] |
|---|---|---|---|---|---|---|
| | staubtrocken | klebfrei | 24 | 48 | 72 | |
| Beispiel 1 | 5,5 | 8 | 1/2 | 1+ | 0/1 | 60 |
| Beispiel 2 | 5,5 | 8 | 1- | 0/1 | 0- | 60 |
| Beispiel 3 | 5,5 | 8 | 1/2 | 1- | 0- | 60 |
| Vergleich 1 | 2,5 | 5,5 | 1- | 1+ | 0- | 60 |
| Beispiel 4 | 4,5 | 8,0 | 0/1 | 0(-) | 0 | 50 |
| Beispiel 5 | 5,0 | 16,0 | 0/1 | 0(-) | 0 | 50 |
| Vergleich 2 | 2,5 | 4,5 | 0/1 | 0- | 0(-) | 50 |

Aus dem Vergleichbeispiel 3, den Beispielen 6 und 7 wurden durch Zugabe von aromatischen Polyisocyanaten (®Desmodur L, ®Desmodur IL = Handelsprodukte der Bayer AG) Klarlacke hergestellt, die nach Einstellen auf Spritzviskosität entsprechend einer Auslaufzeit von 25 Sekunden mit Butylacetat auf Glasplatten in einer Schichtdicke von ca. 150 $\mu$m (Naßfilm) aufgebracht wurden.

Die Kenndaten der Bindemittel und Lacke sowie die Eigenschaften sind in den folgenden Tabellen

aufgeführt:

## Verdünnungsverhalten (Viskosität entsprechend Auslauf-zeit (s) DIN 53211)

| Feststoffgehalt (%) | 80 | 75 | 70 | 65 | 60 | 55 |
|---|---|---|---|---|---|---|
| Beispiel 6 | 205 | 90 | 45 | 25 | 19 | - |
| Beispiel 7 | 152 | 76 | 39 | 23 | - | - |
| Vergleich 3 | n.m. | n.m. | 71 | 42 | 25 | 18 |

n.m. = nicht meßbar

## Lackrezeptur (Gew.-Tl.)

| | I | II | III |
|---|---|---|---|
| Beispiel 6 | 100 | - | - |
| Beispiel 7 | - | 100 | - |
| Vergleich 3 | - | - | 100 |
| ®Desmodur IL/L 6:4 | 88,9 | 88,9 | 74,1 |
| Butylacetat | 71,6 | 65,6 | 50,0 |

Durch die Kombination der in der Lackrezeptur angegebenen Komponenten wurde ein Klarlack hergestellt, der eine Viskosität entsprechend einer Auslaufzeit von jeweils 26 s aufwies.

®Desmodur IL = 50 %ige Lösung eines aromatischen Polyisocyanats in n-Butylacetat
®Desmodur L = 75 %ige Lösung eines aromatischen Polyisocyanats in Ethylacetat

Prüfung der Klarlacke (180 µm)

| | | I | II | III |
|---|---|---|---|---|
| Viskosität entsprechend einer Auslaufzeit (s) DIN 53211) | 0 h | 26 | 26 | 26 |
| | 2 h | 33 | 35 | 33 |
| | 4 h | 49 | 56 | 44 |
| | 6 h | 72 | 90 | 57 |
| | 8 h | 110 | 140 | 80 |
| Standzeit (h) | | 8 - 24 | 8 - 24 | 8 - 24 |
| Handtrocknung (min) | | 43 | 46 | 74 |
| Pendeldämpfung (König) (s) | nach 2 h | 27 | 24 | 21 |
| | 3 h | 38 | 31 | 32 |
| | 4 h | 48 | 39 | 45 |
| | 6 h | 60 | 50 | 64 |
| | 8 h | 71 | 64 | 84 |
| | 24 h | 122 | 119 | 143 |

Aus den im Vergleichsbeispiel 4 und den Beispielen 8 und 9 beschriebenen Bindemitteln Wurden pigmentierte Weißlacke nach der angegebenen Rezeptur hergestellt und mit Melaminharzvernetzern eingebrannt. Dabei wurden harte und elastische Filme mit guten filmoptischen Eigenschaften erhalten. Einbrennbedingungen: 130° C/30 Minuten;
Schichtdicke der aufgezogenen Filme: 120 µm

|  | | | |
|---|---|---|---|
| Harz aus Vergleichsbeispiel 4 | 131,73 | | |
| Harz aus Beispiel 8 | | 109,6 | |
| Harz aus Beispiel 9 | | | 109,6 |
| | | | |
| Butanol verethertes Melamin-harz [1] | 4,73 | 4,73 | 4,73 |
| Maprenal MF-Paste 650 [2] | 106,38 | 106,38 | 106,38 |
| Glykolsäurebutyylester | 3,96 | 3,96 | 3,96 |
| Butanol | 11,13 | 11,13 | 11,13 |
| Xylol | 7,0 | 12,0 | 13,0 |
| Methoxypropanol | 6,60 | 6,60 | 6,60 |
| Verlaufmittel [3] | 0,57 | 0,57 | 0,57 |

[1] ®Maprenal MF650, 55 %ig = Handelsprodukt der
　　　　　　　　　　　　　　　Firma Hoechst AG

[2] Pigmentpastenzubereitung im Gewichtsverhältnis
　　100 Tle ®Maprenal MF650, 55 %ig, zu 220 Tln Titan-
　　dioxid

[3] ®Baysilonöl OL, 10 %ig in Ethylglykolacetat =
　　Handelsprodukt der Firma Bayer AG


## Patentansprüche

1. Verwendung von Veresterungsprodukten von
   A. Polyolen, die im Mittel mindestens 3 Hydroxylgruppen pro Molekül und
   pro Hydroxylgruppe im Mittel 0,5 bis 15 aber pro Molekül im Mittel insgesamt nicht mehr als 20 Ethergruppen enthalten, und
   B. 0,05 bis 1,0 Äquivalenten (bezogen auf Hydroxylgruppen von A)
   $C_2$-$C_{30}$- Monocarbonsäuren
   mit der Maßgabe, daß die Veresterungsprodukte aus A und B eine Säurezahl von maximal 5, eine Hydroxylzahl von bis 800 und im Mittel pro Molekül 0,1 bis 6 Hydroxylgruppen aufweisen,
   als Reaktivverdünner für Lacksysteme auf Basis von Alkydharzen und/oder ölfreien Polyestern.

2. Verwendung nach Anspruch 1, wobei die Polyole A im Mittel 4 bis 8 Hydroxylgruppen pro Molekül enthalten.

3. Verwendung nach Ansprüchen 1 und 2, wobei die Polyole A pro Hydroxylgruppe im Mittel 1 bis 5 Ethergruppen enthalten.

4. Verwendung nach Ansprüchen 1 - 3, wobei Veresterungsprodukte von 0,10 bis 0,95 Äquivalenten (bezogen auf Hydroxylgruppen von A) $C_2$-$C_{30}$-Monocarbonsäuren verwendet werden.

5. Verwendung nach Ansprüchen 1 - 4, wobei Veresterungsprodukte von 0,30 bis 0,90 Äquivalenten (bezogen auf Hydroxylgruppen von A) $C_2$-$C_{30}$-Monocarbonsäuren verwendet werden.

17

6. Verwendung nach Ansprüchen 1 - 5, wobei die Monocarbonsäuren B 6 bis 30 C-Atome pro Molekül besitzen.

7. Verwendung nach Ansprüchen 1-6, wobei die Monocarbonsäuren 8 bis 24 C-Atome pro Molekül enthalten.

8. Verwendung nach Ansprüchen 1 - 7 mit der Maßgabe, daß die Veresterungsprodukte eine Hydroxylzahl von 10 bis 500 aufweisen.

**Claims**

1. The use of esterification products of
   A. polyols containing on average at least 3 hydroxyl groups per molecule and, per hydroxyl group, an average of 0.5 to 15, but in all no more on average than 20 ether groups per molecule and
   B. 0.05 to 1.0 equivalent (based on hydroxyl groups of A) of $C_2$-$C_{30}$ monocarboxylic acids,
   with the proviso that the esterification products of A and B have an acid value of at most 5, a hydroxyl value of from 5 to 800 and, on average, contain from 0.1 to 6 hydroxyl groups per molecule,
   as reactive diluents for paint systems based on alkyd resins and/or oil-free polyesters.

2. The use claimed in claim 1, wherein the polyols A contain on average 4 to 8 hydroxyl groups per molecule.

3. The use claimed in claims 1 and 2, wherein the polyols A contain on average 1 to 5 ether groups per hydroxyl group.

4. The use claimed in claims 1 to 3, wherein esterification products of 0.10 to 0.95 equivalent (based on hydroxyl groups of A) of $C_2$-$C_{30}$ monocarboxylic acids are used.

5. The use claimed in claims 1 to 4, wherein esterification products of 0.30 to 0.90 equivalent (based on hydroxyl groups of A) of $C_2$-$C_{30}$ monocarboxylic acids are used.

6. The use claimed in claims 1 to 5, wherein the monocarboxylic acids B contain from 6 to 30 carbon atoms per molecule.

7. The use claimed in claims 1 to 6, wherein the monocarboxylic acids contain from 8 to 24 carbon atoms per molecule.

8. The use claimed in claims 1 to 7, with the proviso that the esterification products have a hydroxyl value of from 10 to 500.

**Revendications**

1. Utilisation de produits d'estérification de :
   A. des polyols contenant en moyenne au moins trois groupes hydroxy par molécule et en moyenne 0,5 à 15 groupes éther par groupe hydroxy mais en moyenne au total pas plus de 20 groupes ether par molècule,
   B. 0,05 à 1,0 équivalent (par rapport aux groupes hydroxy de A) d'acides monocarboxyliques en $C_2$-$C_{30}$,
   sous réserve que les produits d'estérification de A et B aient un indice d'acide de 5 au maximum, un indice d'hydroxyle de 5 à 800 et contiennent en moyenne de 0,1 à 6 groupes hydroxy par molécule,
   en tant que diluants réactifs pour des systèmes de vernis à base de resines alkydes et/ou de polyesters exempts d'huile.

2. Utilisation selon la revendication 1, dans laquelle les polyols A contiennent en moyenne 4 à 8 groupes hydroxy par molécule.

3. Utilisation selon les revendications 1 et 2, dans laquelle les polyols A contiennent en moyenne de 1 à 5 groupes éther par groupe hydroxy.

4.  Utilisation selon les revendications 1 à 3, dans laquelle on utilise les produits d'estérification de 0,10 à 0,95 équivalent (par rapport aux groupes hydroxy de A) d'acides monocarboxyliques en $C_2$-$C_{30}$.

5.  Utilisation selon les revendications 1 à 4, dans laquelle on utilise des produits d'estérification de 0,30 à 0,90 équivalent (par rapport aux groupes hydroxy de A) d'acides monocarboxyliques en $C_2$-$C_{30}$.

6.  Utilisation selon les revendications 1 à 5, dans laquelle les acides monocarboxyliques B contiennent 6 à 30 atomes de carbone par molécule.

7.  Utilisation selon les revendications 1 à 6, dans laquelle les acides monocarboxyliques contiennent de 8 à 24 atomes de cabone par molécule.

8.  Utilisation selon les revendications 1 à 7, dans laquelle les poduits d'estérification ont un indice d'hydroxyle de 10 à 500.